# EUROPÄISCHE PATENTSCHRIFT

(11) **EP 0 894 989 B1**
(45) Veröffentlichungstag und Bekanntmachung des Hinweises auf die Patenterteilung: **12.05.2004**
(21) Anmeldenummer: 97810543.5
(22) Anmeldetag: 29.07.1997
(51) Int. Cl.: F16C 29/04, B21D 37/12

(54) **Haltevorrichtung für eine Säulenführung einer Werkzeugmaschine**
Device for securing a column of a machine tool
Dispositif de retenue d'une colonne de machine-outil

(43) Veröffentlichungstag der Anmeldung: 03.02.1999
(73) Patentinhaber: Agathon A.G. Maschinenfabrik, CH-4500 Solothurn (CH)
(72) Erfinder: Graber, Martin, CH-3294 Büren A/A (CH)
(74) Vertreter: BOVARD AG - Patentanwälte

(56) Entgegenhaltungen:
- DE-C- 755 988
- FR-A- 2 275 976
- US-A- 3 469 894

## Beschreibung

Die vorliegende Erfindung bezieht sich auf eine Vorrichtung für ein aus mehreren Platten zusammengesetzten, mindestens aus einem ersten Teil und einem zweiten Teil bestehenden Werkzeugs gemäss dem Oberbegriff des Patentanspruchs 1, wie sie aus der US-A-3 469 834 bekannt gesorden ist.

Bei derartigen Werkzeugen kann der erste Teil, der die Säulen trägt, von einem zweiten Teil, der mit entsprechenden Führungen für die Aufnahme der Säulen ausgestattet ist, in welchen die Säulen beispielsweise mittels in Käfigen gehaltenen Kugeln geführt sind, getrennt werden. Damit gewährleistet ist, dass die Kugelkäfige mindestens teilweise auf den Säulen aufgesteckt bleiben, insbesondere wenn der erste Teil vertikal aus dem zweiten Teil des Werkzeugs ausgehoben werden kann, sind in bekannter Weise Haltevorrichtungen vorgesehen. Mit diesen wird ein vollständiges Ausfahren des Kugelkäfigs aus der Säule vermieden.

Üblicherweise wird dieser die Säulen enthaltende erste Teil des Werkzeuges, wenn er aus dem zweiten Teil entfernt worden ist, mindestens zeitweise derart auf einer Unterlage abgestellt, dass eine Kante der die Säulen tragenden Platte und die der Platte abgewandten Endbereiche von zwei Säulen auf dieser Unterlage aufliegen. Dabei kann der entsprechende Kugelkäfig, wenn er weit über die Säule hinausragt, beschädigt werden, insbesondere beim Abkippen oder durch Schläge.

Die Aufgabe der vorliegenden Erfindung besteht nun darin, die Haltevorrichtung so zu gestalten, dass der Käfig für Wälzkörper bei getrennten Werkzeugteilen vollständig auf die Säule aufgeschoben werden kann und durch die Haltevorrichtung in dieser Lage gehalten werden kann. Des weiteren soll der Käfig ohne Aufwand wieder in die ausgefahrene Lage gebracht werden können, wo er wiederum durch die Haltevorrichtung gehalten wird, was zum Einfahren der entsprechenden Säulen in die Führungen notwendig ist.

Erfindungsgemäss erfolgt die Lösung dieser Aufgabe bei der gattungsgemäßen Anordnung durch die im Zweiten Teil der Patentanspruchs 1 angegebenen Merkmale.

In vorteilhafter Weise besteht das Rückhalteelement aus einem elastischen Element, welches in der Längsbohrung der Säule angeordnet ist. Die Stange kann dann in die vollständig eingeschobene Lage gebracht werden, was durch ein geringes Drücken erreicht wird, in welcher diese durch das elastische Element klemmend festgehalten wird. Durch Zug kann der Halteteil aus dieser Halterung gelöst werden.

Eine vorteilhafte Ausführungsform der Vorrichtung besteht darin, dass die Stange des Halteteils hohlzylindrisch ausgebildet ist und dass in die Längsbohrung der Säule eine Schraube eingeschraubt werden kann, deren Kopf als Anschlag für ein innenseitig in der hohlzylindrischen Stange angebrachtes Ringelement dient und die ausgezogene Lage des Halteteils festlegt. Durch geeignete Wahl der Länge der Schraube und je nachdem, wie tief die Schraube in die Längsbohrung der Säule eingeschraubt ist, kann der die ausgezogene Lage des Halteteils festlegende Anschlag eingestellt werden.

In vorteilhafter Weise ist das elastische Element als Federring ausgebildet, welcher in eine Ausnehmung eingesetzt werden kann, die im dem Kopf abgewandten Bereich der Schraube angebracht ist. Über diesen Federring kann das Ringelement der hohlzylindrischen Stange des Halteteils geschoben werden, bis die eingeschobene Lage erreicht ist, wodurch eine klemmende Halterung erreicht wird. Dadurch ist eine einfache und optimale Halterung des Halteteils in der eingeschobenen Lage gewährleistet.

In vorteilhafter Weise verfügt die Scheibe des Halteteils über Ausschnitte, wodurch nur die zwischen den Ausschnitten liegenden Bereiche der Scheibe über den Umfang der entsprechenden Säule vorstehen. Da die Scheibe bezüglich der entsprechenden Säule um die Längsachse drehbar ist, kann die Scheibe beim Abstellen des entsprechenden Werkzeugteils mit den Säulen auf eine Unterlage so gedreht werden, dass ein Ausschnitt der Scheibe der Unterlage gegenüberliegend ist. Dadurch wird vermieden, dass das Gewicht des Werkzeugteils beim Kippen durch die Scheibe aufzunehmen ist, wodurch auch eine Beschädigung der Scheibe ausgeschlossen werden kann.

Eine Ausführungsform einer erfindungsgemässen Vorrichtung wird nachfolgend anhand der beiliegenden Zeichnung beispielhaft näher erläutert.

Es zeigt
Fig. 1 eine Längsschnittdarstellung durch eine Säule mit vollständig aufgeschobenem Kugelkäfig und erfindungsgemässer Haltevorrichtung in der eingeschobenen Lage;
Fig. 2 eine Längsschnittdarstellung durch die Säule gemäss Fig. 1 mit der erfindungsgemässen Haltevorrichtung in der voll ausgefahrenen Lage und ausgefahrenem Kugelkäfig;
Fig. 3 eine Ansicht von unten auf die erfindungsgemässe Vorrichtung gemäss Fig. 1; und
Fig. 4 in vergrösserter Darstellung der hintere Endbereich der Längsbohrung in der Säule gemäss Fig. 1.

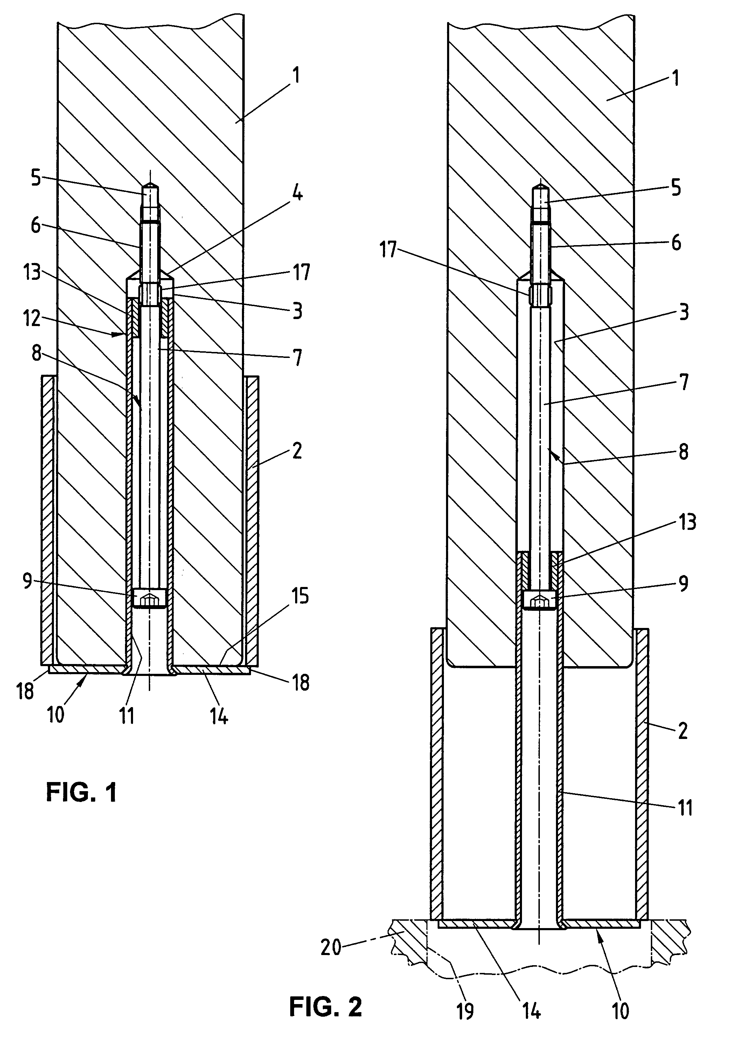

In Fig. 1 ist der freie Endbereich einer Säule 1 eines entsprechenden Werkzeugs im Schnitt dargestellt. Auf diese Säule 1 aufgeschoben ist ein Käfig, der in diesem Ausführungsbeispiel als Kugelkäfig 2 ausgebildet und schematisch dargestellt ist, und der in bekannter Weise nicht dargestellte Kugeln zur spielfreien Führung der Säule in einer entsprechenden Führung 19 in einer Grundplatte 20 des Werkzeugs enthält. Vom äusseren Ende der Säule 1 her ist eine koaxial zur Säule 1 verlaufende Längsbohrung 3 angebracht. Die Längsbohrung 3 ist an ihrem Grund 4 mit einer Verlängerungsbohrung 5 ausgestattet, die einen kleineren Durchmesser hat als die Längsbohrung 3, und die mit einem Gewindeteil 6 versehen ist.

In den Gewindeteil 6 ist eine einen Schaft 7 aufweisende Schraube 8 eingeschraubt, die mit einem Kopf 9 versehen ist.

Ebenfalls in die Längsbohrung 3 eingesetzt ist ein Halteteil 10, der eine hohlzylindrische Stange 11 aufweist, in welche die Schraube 8 zu liegen kommt. Im in die Längsbohrung 3 hineinragenden Endbereich 12 der hohlzylindrischen Stange 11 ist innenseitig ein Ringelement 13 eingesetzt.

Am dem Endbereich 12 der hohlzylindrischen Stange 11 gegenüberliegenden Ende ist eine Scheibe 14 befestigt, die in der vollständig eingeschobenen Lage des Halteteils 10 in die Längsbohrung 3, wie dies in Fig. 1 dargestellt ist, auf der Stirnseite 15 der Säule 1 zur Anlage kommt. Somit bildet die Stirnseite 15 der Säule 1 einen Anschlag, der die voll eingeschobene Lage des Halteteils 10 festlegt.

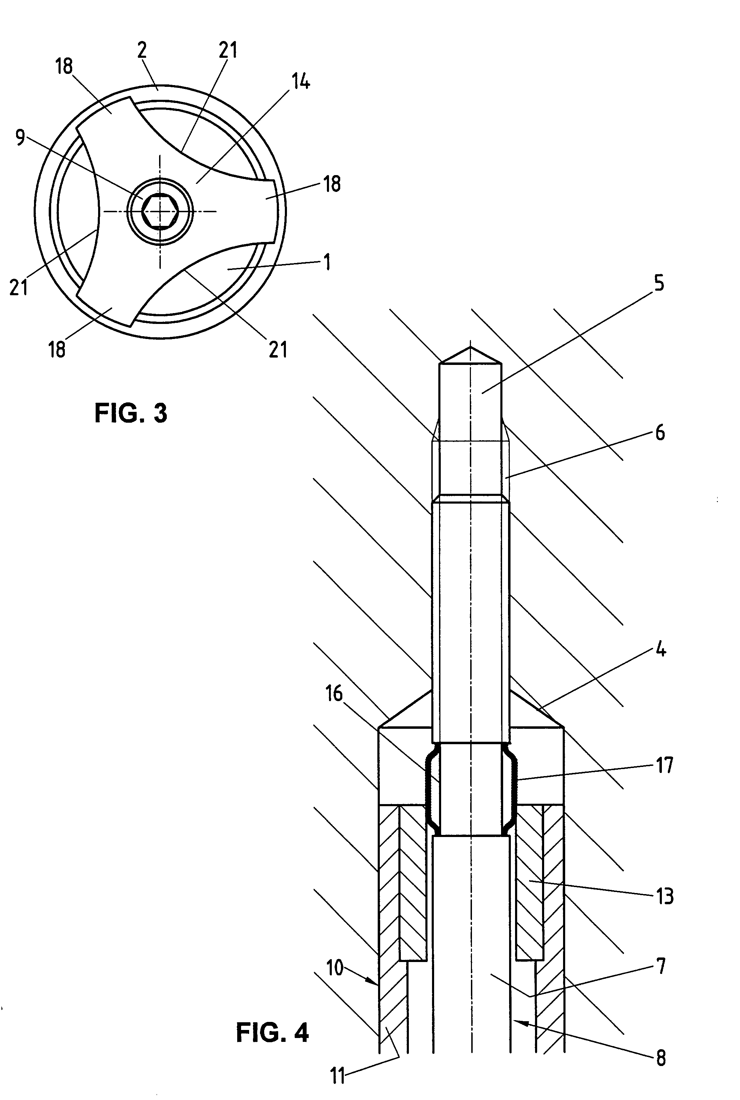

Am Bereich des Schaftes 7 der Schraube 8, der dem Gewindeteil 6 benachbart ist, ist eine ringförmige Ausnehmung 16 (Fig. 4) angebracht, in welche ein Federring 17 eingesetzt ist. In der eingeschobenen Lage des Halteteils 10 in die Säule 1, wie dies in Fig. 1 dargestellt ist, ist das Ringelement 13 mindestens teilweise über den Federring 17 geschoben, der Federring 17 hält somit das Ringelement 13 und demzufolge den Halteteil 10 in der hier dargestellten eingeschobenen Lage klemmend fest.

Die Scheibe 14, die an ihrem Umfang Bereiche 18 aufweist, die über die Säule 1 hinausragen, hält den Kugelkäfig 2 in der voll auf die Säule 1 aufgeschobenen Lage, wie dies in Fig. 1 dargestellt ist.

In Fig. 2 ist der Halteteil 10 in der voll ausgefahrenen Lage dargestellt. Die hohlzylindrische Stange 11 des Halteteils 10 ist entlang der Längsbohrung 3 und der darin eingesetzten Schraube 8 auswärts verschoben worden, bis das Ringelement 13 auf dem Kopf 9 der Schraube 8 anstösst. Somit dient der Kopf 9 der Schraube 8 als die voll ausgezogene Lage des Halteteils 10 begrenzender Anschlag. Der Kugelkäfig 2 kann sich nun entlang der Säule 1 verschieben, bis er durch die Scheibe 14 des Halteteils 10 gehalten wird. Diese Position nimmt der Kugelkäfig 2 auch ein, wenn er vollständig aus der Führung 19 der Grundplatte 20 des Werkzeugs ausgefahren ist. Der Kugelkäfig 2 kann dann in die eingeschobene Lage gebracht werden, dargestellt in Fig. 1, in welcher dieser durch den Halteteil 10 und den Federring 17 gehalten wird. Ein Zug am Halteteil 10 genügt, um diesen aus der Haltung durch den Federring 17 zu lösen, damit wieder die in Fig. 2 dargestellte Position erreicht werden kann, in welcher sich der Kugelkäfig 2 befinden muss, damit die Säule 1 wieder in die Führung 19 eingefahren werden kann und der Kugelkäfig 2 in die richtige Führungsposition gelangt.

Wie aus Fig. 3 ersichtlich ist, weist die Scheibe 14, die den Kugelkäfig 2 auf der Säule 1 hält, Ausschnitte 21 auf. Somit ragen nur die Bereiche 18 über den Umfang der Säule 1 hinaus. Die Scheibe 14 kann somit beim Abstellen des Werkzeuges auf die Säulen 1 auf einer Unterlage und bevor diese über zwei Säulen 1 abgekippt und umgelegt wird, so gedreht werden, dass der Auflagepunkt der Säule 1 bzw. des Kugelkäfigs 2 beim Kippen auf der Unterlage in einen Ausschnitt 21 zu liegen kommt. Dadurch wird vermieden, dass die Scheibe 14 das gesamte Gewicht des Werkzeugs aufnehmen muss, was zu einer Beschädigung der Scheibe 14 führen könnte.

Fig. 4 zeigt in vergrösserter Darstellung den Ausschnitt des hinteren Bereiches der Längsbohrung 3 gemäss Fig. 1. Ersichtlich ist hierbei insbesondere die ringförmige Ausnehmung 16, die am Schaft 7 der Schraube 8 angebracht ist, und in welche der Federring 17 eingesetzt ist. Beim Federring 17 handelt es sich um einen handelsüblichen Teil, die beispielsweise unter der Bezeichnung "Star-Toleranzringe" im Handel sind. Die Schraube 8 ist im Gewindeteil 6 der Verlängerungsbohrung 5 eingeschraubt. Um zu vermeiden, dass sich diese Schraube im Betrieb des Werkzeuges lösen kann, ist diese mit einer Schraubensicherung ausgestattet, die aus einer mehrmalig lösbaren Kunststoffbeschichtung, die auf dem Gewinde der Schraube aufgetragen ist, besteht. In dieser vergrösserten Darstellung ist auch nochmals ersichtlich, wie das Ringelement 13, das in die hohlzylindrische Stange 11 des Halteteils 10 eingesetzt ist, durch den Federring 17 klemmend gehalten ist.

Mit dieser erfindungsgemässen Haltevorrichtung für einen Käfig für Wälzkörper auf einer Säule eines aus mehreren Platten zusammengesetzten, aus einem ersten Teil und einem zweiten Teil bestehenden Werkzeugs wird erreicht, dass beim Einbau, Ausbau und Umbau des Werkzeugs die Käfige 2 auf den Säulen 1 in optimaler Weise vor Beschädigungen geschützt sind, wobei die Handhabung sehr einfach ist.

## Patentansprüche

1. Vorrichtung für ein aus mehreren Platten zusammengesetztes, mindestens aus einem ersten Teil und einem zweiten Teil bestehenden Werkzeugs, insbesondere Stanzwerkzeug oder Formenbauwerkzeug, bei welchem der erste Teil Säulen (1) trägt, die in entsprechenden Führungen (19) im zweiten Teil mittels in Käfigen (2) gehaltenen Wälzkörpern geführt sind, so dass mit dem ersten Teil bezüglich des zweiten Teils ein Arbeitshub ausführbar ist, wobei die Vorrichtung aus einer Säule (1), einem käfig (3) mit Wälzkörpern und einer Haltevorrichtung für den auf der Säule (1) angeordneten käfig (3) besteht, welche Haltevorrichtung jeweils einen Halteteil (10) umfasst, der aus einer Stange (11) besteht, die in einer am freien Ende der Säule (1) angebrachten Längsbohrung (3) verschiebbar gehalten ist und deren Verschiebeweg durch Anschläge begrenzt ist, wobei die Stänge (11) stirnseitig mit einer über den Umfang der Säule (1) vorstehenden Scheibe (14) ausgestattet ist, **dadurch gekennzeichnet, dass** der Halteteil (10) in der in die Säule (1) eingeschobenen Lage durch ein Rückhalteelement (17) lösbar gehalten ist.

2. Vorrichtung nach Anspruch 1, **dadurch gekennzeichnet, dass** das Rückhalteelement (17) aus einem elastischen Element besteht, das in der Längsbohrung (3) der Säule (1) angeordnet ist, und welches die Stange (11) des Halteteils (10) in der eingeschobenen Lage klemmend festhält.

3. Vorrichtung nach Anspruch 1 oder 2, **dadurch gekennzeichnet, dass** die Stange (11) des Halteteils (10) hohlzylindrisch ausgebildet ist, in welche innenseitig im in die Längsbohrung (3) hineinragenden Endbereich (12) ein Ringelement (13) angebracht ist, dass in einen Gewindeteil (6) einer Verlängerungsbohrung (5), die am Grund der Längsbohrung (3) in der Säule (1) angebracht ist, eine Schraube (8) eingeschraubt ist, deren Kopf (9) als Anschlag für das Ringelement (13) dient und die ausgezogene Lage des Halteteils (10) festlegt.

4. Vorrichtung nach Anspruch 3, **dadurch gekennzeichnet, dass** im dem Kopf (9) abgewandten Bereich der Schraube (8) eine ringförmige Ausnehmung (16) angebracht ist, und dass das elastische Element als Federring (17) ausgebildet ist, welcher in die Ausnehmung (16) eingesetzt ist und über welchen das Ringelement (13) der hohlzylindrischen Stange (11) des Halteteils (10) in der eingeschobenen Lage zu liegen kommt und klemmend gehalten ist.

5. Vorrichtung nach Anspruch 3 oder 4, **dadurch gekennzeichnet, dass** der als Anschlag wirkende Kopf (9) der Schraube (8), der die ausgezogene Lage des Halteteils (10) festlegt, durch die Einschraubtiefe und/oder die Länge der Schraube (8) einstellbar ist, und dass die Schraube (8) mit einer Schraubensicherung ausgestattet ist.

6. Vorrichtung nach einem der Ansprüche 1 bis 5, **dadurch gekennzeichnet, dass** die Scheibe (14) des Halteteils (10) Ausschnitte (21) aufweist, so dass nur die zwischen den Ausschnitten (21) liegenden Bereiche (18) der Scheibe (14) über den Umfang der entsprechenden Säule (1) vorstehen.

7. Vorrichtung nach Anspruch 6, **dadurch gekennzeichnet, dass** die Scheibe (14) bezüglich der entsprechenden Säule (1) um deren Längsachse drehbar ist.

## Claims

1. Device for a tool made up of a plurality of plates put together and consisting of at least a first part and a second part, in particular a blanking or punching die or a mould, in which the first part bears pillars (1) which are led in corresponding guides (19) in the second part by means of roll bodies held in cages (2), so that a working stroke is able to be achieved with the first part in relation to the second part, the device being composed of a pillar (1), a cage (3) with roll bodies and a holding device for the cage (3) disposed on the pillar (1), which holding device comprises in each case a holding part (10) which consists of a rod (11) held displaceably in a longitudinal bore (3) made on the free end of the pillar (1), and whose displacement path is limited by stops, the rod (11) being provided frontally with a disk (14) projecting beyond the circumference of the pillar (1), **characterised in that**, in the position where it is pushed into the pillar (1), the holding part (10) is releasably held by a retention element (17).

2. Device according to claim 1, **characterised in that** the retention element (17) consists of an elastic element which is disposed in the longitudinal bore (3) of the pillar (1), and which holds the rod (11) of the holding part (10) firmly in the pushed-in position in a clamping fashion.

3. Device according to claim 1 or 2, **characterised in that** the rod (11) of the holding part (10) is of hollow, cylindrical design, in which rod an annular element (13) is provided on the inside in the end region (12) projecting into the longitudinal bore (3), and **in that** a screw (8) is screwed into a threaded part (6) of an extension bore (5) made at the bottom of the longitudinal bore (3) in the pillar (1), the head (9) of which screw serves as the stop for the annular element (13), and fixes the pulled-out position of the holding part (10).

4. Device according to claim 3, **characterised in that** an annular recess (16) is provided in the region of the screw (8) remote from the head (9), and **in that** the elastic element is designed as a spring bushing (17) which is inserted into the recess (16) and by means of which the annular element (13) of the hollow, cylindrical rod (11) of the holding part (10) comes to be situated in the pushed-in position and be held in a clamping fashion.

5. Device according to claim 3, **characterised in that** the head (9), serving as a stop, of the screw (8), which head determines the pulled-out position of the holding part (10), is adjustable by means of the screw-in depth and/or the length of the screw (8), and **in that** the screw (8) is provided with a screw locking device.

6. Device according to one of the claims 1 to 5, **characterised in that** the disk (14) of the holding part (10) has cut-outs (21), so that only the regions (18) of the disk (14) situated between the cut-outs (21) project beyond the circumference of the respective pillar (1).

7. Device according to claim 6, **characterised in that** the disk (14) is rotatable with respect to the corresponding pillar (1) about the longitudinal axis thereof.

## Revendications

1. Lunette avec visière de protection amovible (6), se composant d'une monture (2), de verres de lunette (5) correcteurs et maintenus dans la monture (2), des moyens de retenue étant disposés sur la visière de protection amovible (6) et/ou sur la monture de lunette (2), lesquels comprennent deux tiges (9, 11) qui sont insérées dans la visière de protection (6), qui en font saillie et qui sont munies sur la zone détournée de la visière de protection (6) d'un renflement (33, 26, 27), et deux évidements en forme de fente (14, 17) étant ménagés sur la monture (2) en fonction des tiges (9, 11) insérées sur la visière de protection (6), évidements avec lesquels la visière de protection (6) est maintenue sur la monture (2) sensiblement parallèlement devant les verres de lunette (5), **caractérisée en ce que** chacune des deux tiges (9, 10) est insérée dans la visière de protection (6) sur une zone de bordure latérale respective (7 respectivement 8) et **en ce qu'**une tige centrale (11) est introduite sensiblement entre les deux tiges (9, 10) dans la visière de protection (6), **en ce qu'**il est réalisé dans la monture en conséquence sur les deux zones de bordure latérale (12, 13) de la monture (2) respectivement un évidement latéral (14, 15) en forme de fente et dans la zone médiane (16) un évidement central (17) en forme de fente, et **en ce que** les axes longitudinaux des deux évidements latéraux en forme de fente (14, 15) et leurs élargissements respectifs (29) sont dirigés sensiblement les uns vers les autres, **en ce que** l'évidement central en forme de fente (17) est réalisé sensiblement transversalement auxdits deux évidements latéraux en forme de fente (14, 15), de sorte que la monture (2) et la visière de protection (6) posée sont serrées de manière élastique l'une contre l'autre.

2. Lunette avec visière amovible de protection, selon la revendication 1, **caractérisée en ce que** la visière de protection (6) présente une surface bombée convexe qui est dirigée vers l'extérieur à l'état monté sur la lunette (1) et **en ce que** les tiges (9, 10, 11) sont placées respectivement perpendiculairement à cette surface et dirigées vers l'intérieur.

3. Lunette avec visière amovible de protection, selon la revendication 1, **caractérisée en ce que** les deux broches (9, 10) fixées sur les zones latérales de bordure (7, 8) se composent chacune d'une partie filetée (30), d'une partie d'appui en forme de bride (31) et d'une partie cylindrique (32) et le renflement (33) situé dans le prolongement de la partie cylindrique (32) présente une forme sphérique et **en ce que** l'évidement correspondant en forme de fente (14, 15) présente une largeur qui est inférieure au renflement sphérique tandis que la largeur (c) de l'élargissement (29) est légèrement supérieure et la longueur (I) de l'élargissement (29) est légèrement supérieure au diamètre du renflement sphérique (33).

4. Lunette avec visière amovible de protection, selon la revendication 3, **caractérisée en ce que** deux perçages sont ménagés respectivement sur la face détournée de la visière de protection (6) dans la partie d'appui en forme de bride (31) des deux tiges (9, 10) fixées sur les zones de bordure latérales (7, 8) de la visière de protection (6).

5. Lunette avec visière amovible de protection, selon l'une des revendications 1 à 4, **caractérisée en ce que** la tige centrale (11) se compose d'une partie filetée (20), d'une partie d'appui en forme de bride (21), d'une première partie cylindrique (22), d'un premier tronc conique effilé (23), d'une seconde partie cylindrique (24) et d'un second tronconique en entonnoir (25) et, dans le prolongement, d'une troisième partie cylindrique (26) qui est terminée par une collerette (27) et **en ce que** l'évidement central correspondant en forme de fente (17) est ouvert en forme d'entonnoir dirigé vers le bord supérieur de la monture (2), présente un étranglement (18) et un perçage (19) se trouvant dans la continuité de l'étranglement (18), la largueur (b) de l'étranglement (18) étant légèrement supérieure au diamètre de la seconde partie cylindrique (24) et **en ce que** le diamètre (D1) du perçage correspond approximativement au diamètre de la troisième partie cylindrique (26).

6. Lunette avec visière amovible de protection, selon la revendication 5, **caractérisée en ce que** deux perçages (28) sont ménagés sur la face détournée de la visière de protection (6) dans la partie d'appui en forme de bride (21) de la tige centrale (11) fixée sur la visière de protection (6).

7. Lunette avec visière amovible de protection, selon l'une des revendications 7 à 6, **caractérisée en ce que** la visière de protection (6) se compose de verre acrylique qui est transparent ou teinté.
